(19) Europäisches Patentamt
European Patent Office
Office européen des brevets

(11) Veröffentlichungsnummer : **0 034 715**
**B1**

(12) # EUROPÄISCHE PATENTSCHRIFT

(45) Veröffentlichungstag der Patentschrift : **24.08.83**

(51) Int. Cl.³ : **C 09 B 29/085**// D06P3/54

(21) Anmeldenummer : **81100588.3**

(22) Anmeldetag : **28.01.81**

(54) **Marineblaue Farbstoffmischungen und ihre Verwendung zum Färben von Polyestern.**

(30) Priorität : **08.02.80 DE 3004654**

(43) Veröffentlichungstag der Anmeldung : **02.09.81 Patentblatt 81/35**

(45) Bekanntmachung des Hinweises auf die Patenterteilung : **24.08.83 Patentblatt 83/34**

(84) Benannte Vertragsstaaten : **CH DE FR GB IT LI**

(56) Entgegenhaltungen :
**GB A 978 544**
**GB A 1 148 672**
**JP A 73 017 618**

**CHEMICAL ABSTRACTS, Band 92, Nr. 18, Mai 1980, Seite 89, Nr. 148443s Columbus, Ohio, U.S.A.**

**Die Akte enthält technische Angaben, die nach dem Eingang der Anmeldung eingereicht wurden und die nicht in dieser Patentschrift enthalten sind.**

(73) Patentinhaber : **BASF Aktiengesellschaft**
**Carl-Bosch-Strasse 38**
**D-6700 Ludwigshafen (DE)**

(72) Erfinder : **Hansen, Guenter, Dr.**
**Alwin-Mittasch-Platz 8**
**D-6700 Ludwigshafen (DE)**
Erfinder : **Kermer, Wolf-Dieter, Dr.**
**Im Schlittweg 4**
**D-6701 Fussgoenheim (DE)**
Erfinder : **Kolbinger, Hans-Joergen, Dr.**
**Westring 60**
**D-6718 Gruenstadt (DE)**

**EP 0 034 715 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

# Marineblaue Farbstoffmischungen und ihre Verwendung zum Färben von Polyestern

Die Erfindung betrifft Farbstoffmischungen, die als Komponenten Farbstoffe der Formel I

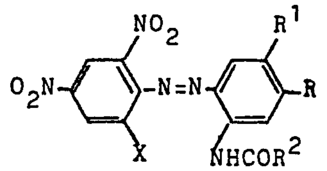

(I)

enthalten, wobei

X Wasserstoff, Chlor oder Brom,

$R^1$ Wasserstoff, Methoxy, Äthoxy oder Phenoxy

$R^2$ Wasserstoff, Methyl, Äthyl oder n- oder i-Propyl und

R einen Rest der Formel

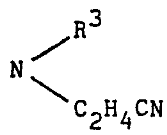 , 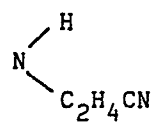 , 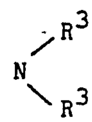 oder 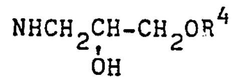

bedeuten, wobei

$R^3$ $C_1$- bis $C_5$-Alkyl, Allyl, Methallyl, Crotonyl, Prenyl oder Benzyl und

$R^4$ gegebenenfalls durch Phenyl oder Phenoxy substituiertes und gegebenenfalls durch 1 bis 3 O-Atome unterbrochenes geradkettiges oder verzweigtes $C_1$- bis $C_8$-Alkyl, $C_3$- bis $C_5$-Alkenyl, gegebenenfalls durch Chlor, Brom, $C_1$- bis $C_4$-Alkyl oder $C_1$- bis $C_4$-Alkoxy substituiertes Phenyl oder Benzyl sind und wobei die Farbstoffmischungen mindestens 40 % an Farbstoffen mit

R = 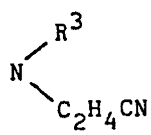

und $NHC_2H_4CN$, 0 bis 20 % eines oder mehrerer Farbstoffe mit

R = 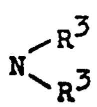

und 10 bis 60 % eines oder mehrerer Farbstoffe mit

R = 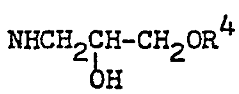

enthalten.

Zur Herstellung der Farbstoffmischungen kann man die Einzelkomponenten mechanisch mischen oder eine Mischkupplung durchführen. Einzelheiten der Herstellung können den Beispielen entnommen werden, in denen sich Angaben über Teile und Prozente, sofern nicht anders vermerkt, auf das Gewicht beziehen.

Die erfindungsgemäßen Farbstoffmischungen zeichnen sich durch hervorragendes färberisches Verhalten, insbesondere Temperaturunabhängigkeit des Aufziehverhaltens, gute Baderschöpfung und gutes Aufbauvermögen bis zu hohen Farbtiefen sowie sehr hohe Farbstärke aus. Die Echtheitseigenschaften der Färbungen entsprechen weitgehend denen der Einzelkomponenten.

Bevorzugte Mischungen enthalten

a) 10 bis 75 % an Farbstoffen der Formel I mit

R = 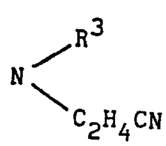

b) 0 bis 75 % an Farbstoffen der Formel I mit

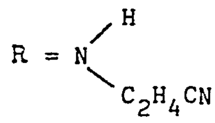

c) 10 bis 60 % an Farbstoffen der Formel I mit

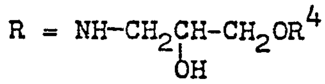

d) 0 bis 20 % an Farbstoffen der Formel I mit

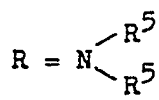

wobei $R^5$ $C_1$- bis $C_5$-Alkyl oder Allyl ist und die Komponenten a) und b) zusammen mindestens 40 % der Mischung ausmachen.

Von besonderer technischer Bedeutung sind Farbstoffmischungen, die als Komponenten Farbstoffe der Formel II

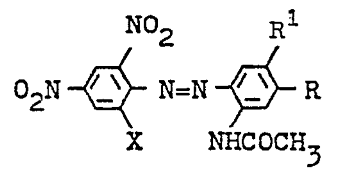 (II)

enthalten, wobei X und $R^1$ die angegebene Bedeutung haben und die Mischung 40 bis 85 % eines oder mehrerer Farbstoff-Paare der Formel II mit

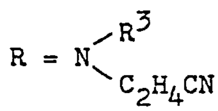 und 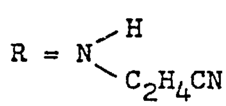

die bezüglich X und $R^1$ übereinstimmen, 0 bis 20 % an Farbstoffen der Formel II mit

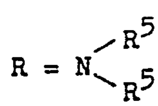

und 15 bis 60 % an Farbstoffen der Formel II mit

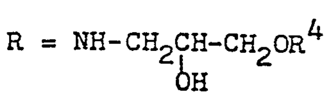

enthält.

Die Farbstoffmischungen können synthesebedingt weitere Nebenkomponenten enthalten ; insbesondere enthalten die Farbstoffe der Formel I bzw. II mit

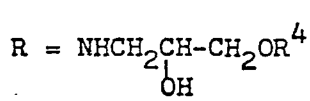

in der Regel geringe Mengen der isomeren Farbstoffe der Formel I bzw. II mit

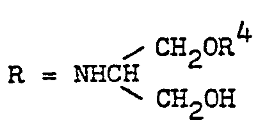

die färberischen Ergebnisse werden dadurch nicht beeinträchtigt.

Gegenüber Farbstoffmischungen, die aus der GB-A-978 544 und JA-A-73/17618 bekannt sind, zeichnen sich die erfindungsgemäßen Mischungen überraschenderweise durch eine beträchtlich erhöhte Farbstärke und bessere Schweißechtheit nachfixierter Färbungen aus.

Beispiel 1

a) 262 Teile 6-Brom-2,4-dinitroanilin werden in 2 000 Teile konzentrierte Schwefelsäure eingetragen. Unter Rühren und Kühlung läßt man bei 5 bis 15 °C 320 Teile Nitrosylschwefelsäure (11,5 % $N_2O_3$) langsam zulaufen und rührt mindestens 3 Stunden bei 10 °C bis 15 °C nach.

b) 301 Teile 2-[N-3'-Methyl-buten-(2')-yl-N-β-cyanäthylamino]-4-acetanisidin werden in 450 Teilen Essigsäure warm gelöst und in ein Gemisch von 2 000 Teilen Wasser, 300 Volumenteilen konzentrierter Salzsäure, 10 Teilen Amidosulfonsäure und 10 Teilen eines Diisobutylnaphthalin-1-sulfonsäure-Gemisches gegeben. Man fügt 4 000 Teile Eis hinzu und läßt unter gutem Rühren die unter a) bereitete Diazoniumsalzlösung bei − 5 bis + 3 °C langsam zulaufen. Durch Zugabe von Natriumacetat oder -formiat bis zu einem pH-Wert von 3 wird die Umsetzung vervollständigt. Der erhaltene Farbstoff wird bei Raumtemperatur oder erhöhter Temperatur abgesaugt, mit Wasser neutral und salzfrei gewaschen und getrocknet. Man erhält etwa 520 Teile eines violettschwarzen Pulvers der Formel

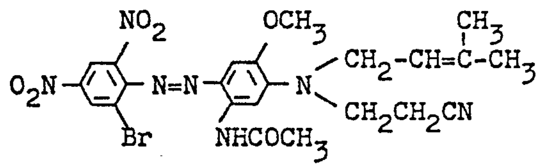

Mit diesem Farbstoff erhält man auf Polyesterfasern blaue Färbungen mit guter Licht-, Thermofixier-, Schweiß- und Waschechtheit. Der Farbstoff zeigt jedoch ein schlechtes Aufbauvermögen und eine starke Abhängigkeit der Farbtiefe von der Temperatur im Farbebad im Bereich von 120 bis 140 °C.

c) Aus 233 Teilen 2-(N-β-Cyanäthyl-amino)-4-acetanisidin erhält man analog Beispiel 1b) 460 Teile des Farbstoffs der Formel

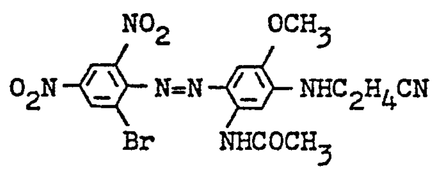

mit dem man auf Polyesterfasern blauviolette Färbungen von geringer Farbtiefe erhält.

d) Aus 236 Teilen 2-Diäthylamino-4-acetanisidin erhält man analog Beispiel 1b) 365 Teile des Farbstoffs der Formel

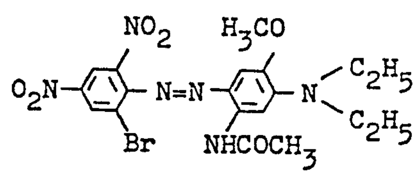

mit dem man Polyesterfasern grünstichig blau färben kann.

e) Aus 310 Teilen 2-(3'-n-Butyloxy-2'-hydroxy-propyl-amino)-4-acetanisidin erhält man analog Beispiel 1b) ca. 510 Teile des Farbstoffs der Formel

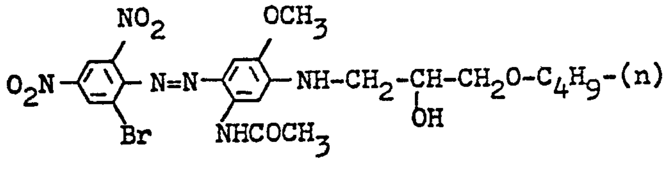

mit dem man Polyesterfasern in grünstichigen Marineblautönen färben kann.

f) Polyestergewebe wird nach dem HT-Verfahren mit einer Farbstoffmischung gefärbt, die aus

20 Teilen des gemäß 1b), 40 Teilen des gemäß 1c), 10 Teilen des gemäß 1d) und 30 Teilen des gemäß 1e) hergestellten Farbstoffs besteht. Dabei wird das Farbstoffgemisch zweckmäßigerweise als Dispergiermittel enthaltende feindisperse Zubereitung eingesetzt.

Man erhält farbstarke, egale Marineblau-Färbungen mit gutem Echtheitsniveau. Im HT-Bereich von 125 bis 135 °C ist die Farbtiefe nur wenig von der Temperatur abhängig. Die Farbstoffmischung zeigt auch bei tiefen Marineblau-Färbungen noch ein gutes Badausziehvermögen und einen guten Farbaufbau.

Beispiel 2

262 Teile 6-Brom-2,4-dinitro-anilin werden wie unter 1a) diazotiert und analog 1b) auf eine Mischung von 56,7 Teilen 2-[N-3′-Methyl-buten-(2′)-yl-N-β-cyanäthylamino]-4-acetanisidin, 99,6 Teilen 2-(N-β-Cyan-äthyl-amino)-4-acetanisidin, 25,1 Teilen 2-Diäthylamino-4-acetanisidin und 86,2 Teilen 2-(3′-n-Butyl-oxy-2′-hydroxy-propyl-amino)-4-acetanisidin gekuppelt.

Man erhält einen Mischfarbstoff, der der in Beispiel 1f) hergestellten mechanischen Mischung in der chemischen Zusammensetzung entspricht.

Der Mischfarbstoff wird nach bekannten Methoden in eine Farbstoffzubereitung überführt und zum Färben von Polyestern verwendet. Dabei werden die gleichen coloristischen Ergebnisse wie bei Beispiel 1f) erzielt.

Beispiel 3

Polyestergewebe wird mit einer Mischung aus 50 Teilen des Farbstoffs aus Beispiel 1c), 20 Teilen des Farbstoffs der Formel

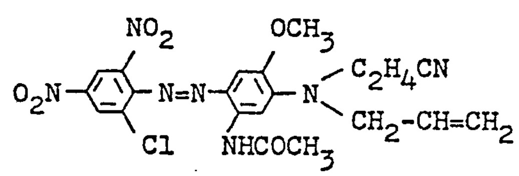

und 30 Teilen des Farbstoffs der Formel

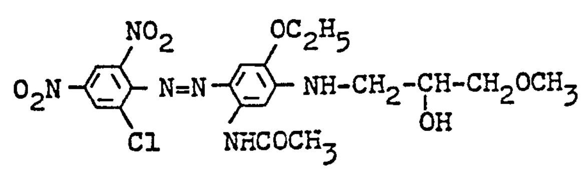

gefärbt. Man erhält farbstarke, egale Marineblau-Färbungen mit guten Echtheiten. Die Mischung zeigt ein gutes Aufbauverhalten bis zu tiefen Marineblau-Tönen.

Farbton und Farbtiefe werden beim HT-Verfahren durch Temperatur- oder pH-Wert-Schwankungen im Färbedad nur wenig beeinflußt.

Beispiel 4

217,5 Teile 6-Chlor-2,4-dinitro-anilin werden analog Beispiel 1a) diazotiert und analog Beispiel 1b) auf eine Mischung von 136,5 Teilen 2-(N-Allyl-N-β-cyanäthyl-amino)-4-acetanisidin, 112,2 Teilen 2-(3′-Phenoxy-2′-hydroxy-propylamino)-4-acetanisidin und 42,9 Teilen 2-(3′-Methoxy-2′-hydroxy-propyl-amino)-4-acetanisidin gekuppelt.

Man erhält 475 Teile eines dunkel gefärbten Farbstoffpulvers, das Polyesterfasern marineblau färbt. Die Färbungen haben gute Licht-, Schweiß-, Wasch- und Thermofixierechtheiten. Die Farbstoff-Mischung zeigt ein gutes färberisches Verhalten, insbesondere ein gutes Aufbauvermögen sowie ein im Bereich von 125 bis 135 °C wenig temperaturabhängiges Ziehvermögen.

Die in der folgenden Tabelle aufgeführten Farbstoff-Gemische werden analog Beispiel 1 bis 4 erhalten und zeigen ähnliche coloristische Eigenschaften.

(Siehe Tabellen Seite 6 ff.)

| Bsp. | % | X | $R^1$ | $R^2$ | R | Herstellung analog Bsp. |
|---|---|---|---|---|---|---|
| 5 | 20 | Cl | $OCH_3$ | $CH_3$ | $N\begin{matrix}\diagup CH_2CH{=}CH_2 \\ \diagdown CH_2CH_2CN\end{matrix}$ | 2 (Mischkupplung) |
| | 50 | " | " | " | $NHCH_2CH_2CN$ | |
| | 30 | " | " | " | $NH-CH_2-\underset{OH}{CH}-CH_2OC_4H_9$ | |
| 6 | (Mol-%) | | | | | 2 |
| | 25 | Cl | $OCH_3$ | $CH_3$ | $N\begin{matrix}\diagup CH_2CH{=}CH_2 \\ \diagdown CH_2CH_2CN\end{matrix}$ | |
| | 25 | Br | " | " | | |
| | 17 | Cl | " | " | $NH-CH_2\underset{OH}{CH}-CH_2OC_6H_5$ | |
| | 17 | Br | " | " | | |
| | 8 | Cl | " | " | $NH-CH_2\underset{OH}{CH}-CH_2OCH_3$ | |
| | 8 | Br | " | " | | |

| Bsp. | % | X | $R^1$ | $R^2$ | R | Herstellung analog Bsp. |
|---|---|---|---|---|---|---|
| | (Gew.-%) | | | | | |
| 7 | 20 | Cl | $OCH_3$ | $CH_3$ | $N(CH_2CH{=}CH_2)(CH_2CH_2CN)$ | Mischkupplung (3 Komponenten) |
| | 45 | " | " | " | $NHCH_2CH_2CN$ | |
| | 25 | " | " | " | $NH-CH_2-CH(OH)-CH_2OC_4H_9$ | |
| | 10 | Br | " | " | $N(C_2H_5)_2$ | 4. Komponente mechanisch beigemischt |
| 8 | 35 | Cl | $OCH_3$ | $CH_3$ | $N(CH_2-CH{=}CH_2)(CH_2-CH_2CN)$ | 7 |
| | 20 | " | " | " | $NHCH_2CH_2CN$ | |
| | 25 | " | " | " | $NH-CH_2-CH(OH)-CH_2OC_4H_9$ | |
| | 20 | Br | " | " | $N(C_2H_5)_2$ | |

| Bsp. | % | X | $R^1$ | $R^2$ | R | Herstellung analog Bsp. |
|---|---|---|---|---|---|---|
| 9 | 60 | Br | $OCH_3$ | $CH_3$ | $N$ ⟨ $CH_2CH{=}CH_2CH_3$<br>$CH_2CH_2CN$ | 7 |
| | 10 | " | " | " | $NHCH_2CH_2CN$ | |
| | 20 | " | " | " | $NH-CH_2-CH-CH_2OC_2H_4OC_2H_5$<br>$\vert$<br>$OH$ | |
| | 10 | Cl | $OC_2H_5$ | $CH_3$ | $N(C_2H_5)_2$ | |
| 10 | 50 | Br | $OCH_3$ | $CH_3$ | $N$ ⟨ $CH_2CH{=}CH_2$<br>$C_2H_4CN$ | 2 |
| | 20 | " | " | " | $NHCH_2CH_2CN$ | |
| | 25 | " | " | " | $NH-CH_2-CH-CH_2OCH_2-CH{=}CH_2$<br>$\vert$<br>$OH$ | |
| | 5 | " | " | " | $N(CH_2-CH{=}CH_2)_2$ | |

| Bsp. | % | X | $R^1$ | $R^2$ | R | Herstellung analog Bsp. |
|---|---|---|---|---|---|---|
| 11 | 70 | Br | $OCH_3$ | $CH_3$ | $N(C_2H_5)(CH_2CH_2CN)$ | 2 |
| | 10 | " | " | " | $NHCH_2CH_2CN$ | |
| | 15 | " | " | " | $NH-CH_2-CH(OH)-CH_2O-CH_2-CH(C_2H_5)-(CH_2)_3-CH_3$ | |
| | 5 | " | " | " | $N(C_4H_9)_2$ | |
| 12 | 30 | Br | $OC_2H_5$ | $CH_3$ | $N(CH_2-CH=CH_2)(CH_2CH_2CN)$ | 1 |
| | 40 | Cl | $OCH_3$ | " | $NHCH_2CH_2CN$ | |
| | 20 | " | " | " | $NH-CH_2-CH(OH)-CH_2O-CH_2-C_6H_5$ | |
| | 10 | " | $OC_2H_5$ | " | $N(C_4H_9)_2$ | |

| Bsp. | % | X | $R^1$ | $R^2$ | R | Herstellung analog Bsp. |
|---|---|---|---|---|---|---|
| 13 | 50 | Br | $OCH_3$ | $CH_3$ | 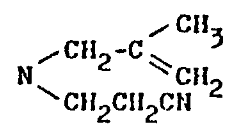 | 1 |
| | 20 | " | " | " | $NHCH_2CH_2CN$ | |
| | 20 | Cl | " | " | $NHCH_2CH-CH_2OC_2H_4OC_2H_4OCH_3$<br>OH | |
| | 10 | Br | " | $C_2H_5$ | $N(CH_3)_2$ | |
| 14 | 35 | Br | $OCH_3$ | $CH_3$ | 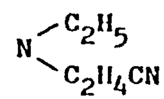 | 2 |
| | 5 | Br | " | " | $NHCH_2CH_2CN$ | |
| | 40 | " | " | " | $NH-CH_2-CH-CH_2OC_6H_5$<br>OH | |
| | 20 | " | " | " | $NH-CH_2-CH-CH_2OC_4H_9$<br>OH | |

| Bsp. | % | X | $R^1$ | $R^2$ | R | Herstellung analog Bsp. |
|---|---|---|---|---|---|---|
| 15 | 20 | Cl | $OCH_3$ | $CH_3$ | 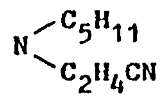 | 2 |
| | 20 | " | " | " | $NHCH_2CH_2CN$ | |
| | 40 | " | " | " | 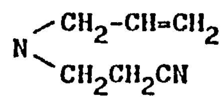 | |
| | 20 | " | " | " | 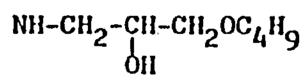 | |
| 16 | 50 | Cl | $OCH_3$ | $CH_3$ | 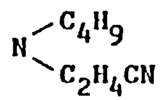 | 2 |
| | 25 | " | " | " | 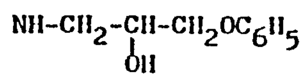 | |
| | 25 | " | " | " | 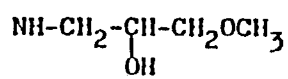 | |

| Bsp. | % | X | $R^1$ | $R^2$ | R | Herstellung analog Bsp. |
|---|---|---|---|---|---|---|
| 17 | 60 | Cl | $OCH_3$ | $CH_3$ | 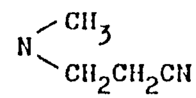 | 1 |
| | 10 | Cl | " | " | $NHCH_2CH_2CN$ | |
| | 30 | Br | $OC_2H_5$ | " | 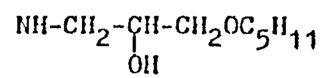 | |
| 18 | 70 | Br | $OCH_3$ | $CH_3$ | 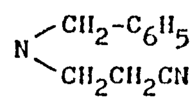 | 1 |
| | 10 | " | " | " | $NHCH_2CH_2CN$ | |
| | 20 | Cl | $OC_2H_5$ | " | 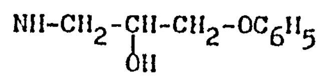 | |

| Bsp. | % | X | $R^1$ | $R^2$ | R | Herstellung analog Bsp. |
|---|---|---|---|---|---|---|
| 19 | 20 | Cl | $OCH_3$ | $CH_3$ | $N<^{CH_2-C_6H_5}_{CH_2CH_2CN}$ | 2 |
| | 50 | " | " | " | $NHCH_2CH_2CN$ | |
| | 30 | " | " | " | $NH-CH_2-\underset{OH}{CH}-CH_2-OC_4H_9$ | |
| 20 | 15 | Cl | $OCH_3$ | $CH_3$ | $N<^{C_6H_5}_{CH_2CH_2CN}$ | 1 |
| | 50 | Br | " | " | $N<^{CH_2-CH=CH_2}_{CH_2CH_2CN}$ | |
| | 5 | " | " | " | $NHCH_2CH_2CN$ | |
| | 25 | Cl | " | " | $NH-CH_2\underset{OH}{CH}-CH_2OC_4H_9$ | |
| | 5 | Br | " | " | $N(C_2H_5)_2$ | |

| Bsp. | % | X | $R^1$ | $R^2$ | R | Herstellung analog Bsp. |
|---|---|---|---|---|---|---|
| 21 | 60 | Br | $OCH_3$ | H | $N\genfrac{}{}{0pt}{}{\diagup CH_2-CH=CH_2}{\diagdown CH_2CH_2CN}$ | 2 |
| | 10 | " | " | " | $NHCH_2CH_2CN$ | |
| | 30 | " | " | $CH_3$ | $NH-CH_2-\underset{OH}{CH}-CH_2OC_2H_4OC_2H_5$ | |
| 22 | 20 | Cl | $OCH_3$ | $CH_3$ | $N\genfrac{}{}{0pt}{}{\diagup CH_2-CH=CH_2}{\diagdown C_2H_4CN}$ | 2 |
| | 50 | " | " | " | $NHCH_2CH_2CN$ | |
| | 30 | " | " | H | $NH-CH_2-\underset{OH}{CH}-CH_2OC_4H_9$ | |

| Bsp. | % | X | $R^1$ | $R^2$ | R | Herstellung analog Bsp. |
|---|---|---|---|---|---|---|
| 23 | 30 | Br | $OC_2H_5$ | $CH_3$ | 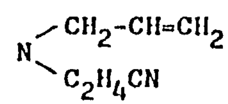 | 2 |
| | 45 | " | " | " | $NHCH_2CH_2CN$ | |
| | 25 | " | $OCH_3$ | " | 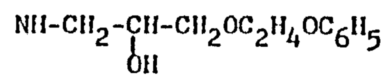 | |
| 24 | 45 | Br | $OCH_3$ | $CH_3$ | 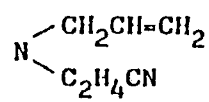 | 1 |
| | 30 | " | " | " | $NHCH_2CH_2CN$ | |
| | 25 | Cl | $OC_2H_5$ | " | 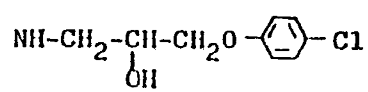 | |

| Bsp. | % | X | $R^1$ | $R^2$ | R | Herstellung analog Bsp. |
|---|---|---|---|---|---|---|
| 25 | 55 | Cl | $OCH_3$ | $CH_3$ | 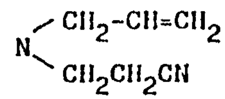 | 7 |
| | 10 | " | " | " | 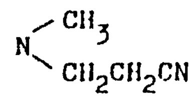 | |
| | 10 | " | " | " | $NHCH_2CH_2CN$ | |
| | 25 | Br | " | " | 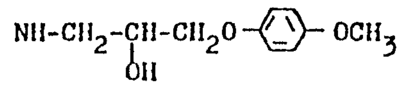 | |
| 26 | 45 | Br | $OCH_3$ | $CH_3$ | 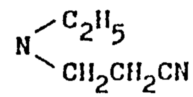 | 2 |
| | 15 | " | " | " | $NHCH_2CH_2CN$ | |
| | 20 | " | " | " | 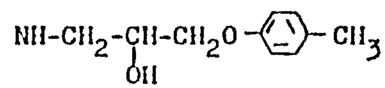 | |
| | 20 | " | " | " | 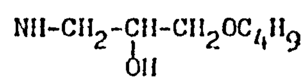 | |

**Ansprüche**

1. Marineblaue Farbstoffmischungen, die als Komponenten Farbstoffe der Formel I

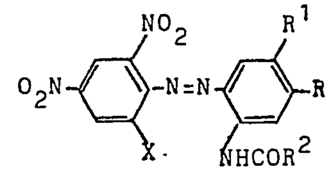 (I)

enthalten, wobei
X Wasserstoff, Chlor oder Brom,
$R^1$ Wasserstoff, Methoxy, Äthoxy oder Phenoxy
$R^2$ Wasserstoff, Methyl, Äthyl oder n- oder i-Propyl und
R einen Rest der Formel

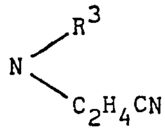, 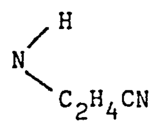, 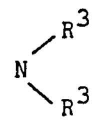 oder 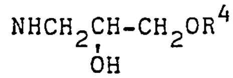

bedeuten, wobei
$R^3$ $C_1$- bis $C_5$-Alkyl, Allyl, Methallyl, Crotonyl, Prenyl oder Benzyl und
$R^4$ gegebenenfalls durch Phenyl oder Phenoxy substituiertes und gegebenenfalls durch 1 bis 3 O-Atome unterbrochenes geradkettiges oder verzweigtes $C_1$- bis $C_8$-Alkyl, $C_3$- bis $C_5$-Alkenyl, gegebenenfalls durch Chlor, Brom, $C_1$- bis $C_4$-Alkyl oder $C_1$- bis $C_4$-Alkoxy substituiertes Phenyl oder Benzyl sind und wobei die Farbstoffmischungen mindestens 40 % an Farbstoffen mit

R = 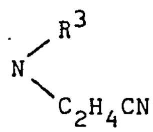

und $NHC_2H_4CN$, 0 bis 20 % eines oder mehrerer Farbstoffe mit

R = 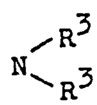

und 10 bis 60 % eines oder mehrerer Farbstoffe mit

R = 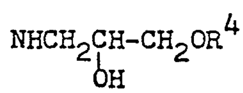

enthalten.

2. Verwendung der Mischungen gemäß Anspruch 1 zum Färben von synthetischen Polyestern.

**Claims**

1. A navy dye mixture, containing dyes of the formula I

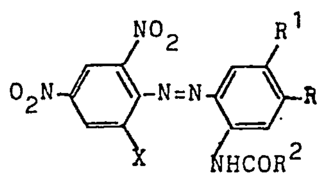 (I)

where
X is hydrogen, chlorine or bromine,
$R^1$ is hydrogen, methoxy, ethoxy or phenoxy,
$R^2$ is hydrogen, methyl, ethyl, n-propyl or i-propyl and
R is

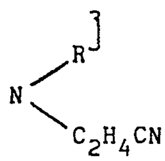 , 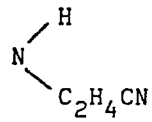 , 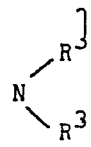 or 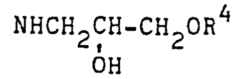

where

$R^3$ is $C_1$-$C_5$-alkyl, allyl, methallyl, crotonyl, prenyl or benzyl,

$R^4$ is unsubstituted or phenyl- or phenoxy-substituted straight-chain or branched $C_1$-$C_8$-alkyl which may be interrupted by 1, 2 or 3 O atoms, or is $C_3$-$C_5$-alkenyl, unsubstituted or chlorine-, bromine-, $C_1$-$C_4$-alkyl- or $C_1$-$C_4$-alkoxy-substituted phenyl or benzyl, the mixture containing not less than 40 % of dyes wherein

R = 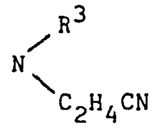

or $NHC_2H_4CN$, from 0 to 20 % of one or more dyes wherein

R = 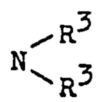

and from 10 to 60 % of one or more dyes wherein

R = 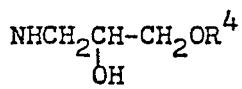

2. The use of a mixture as claimed in claim 1 for dyeing synthetic polyesters.

**Revendications**

1. Mélanges de matières colorantes bleu marine qui contiennent, en tant que constituants, des matières colorantes de formule I

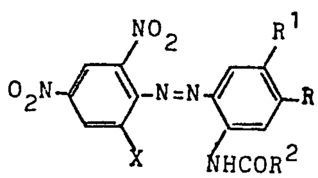 (I)

dans laquelle les différents symboles ont les significations suivantes

X Hydrogène, chlore ou brome,

$R^1$ Hydrogène, méthoxy, éthoxy ou phénoxy,

$R^2$ Hydrogène, méthyle, éthyle ou n- ou i-propyle et

R un radical de formule

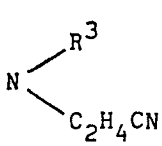 , 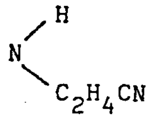 , 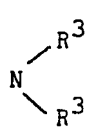 ou 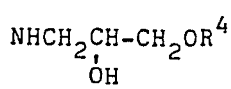

avec

$R^3$ Alcoyle en $C_1$ à $C_5$, allyle, méthallyle, crotonyle, prényle ou benzyle et

$R^4$ Alcoyle en $C_1$ à $C_8$ à chaîne droite ou ramifié, éventuellement substitué par un phényle ou un phénoxy et éventuellement coupé par 1 à 3 atomes de O, alcényle en $C_3$ à $C_5$, phényle ou benzyle éventuellement substitué par un chlore, un brome, un alcoyle en $C_1$ à $C_4$ ou un alcoxy en $C_1$ à $C_4$, ces mélanges de matières colorantes contenant au moins 40 % de matières colorantes dans lesquelles

R = 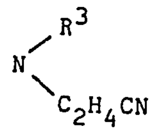

et $NHC_2H_4CN$, 0 à 20 % d'une ou de plusieurs matières colorantes dans lesquelles

R = 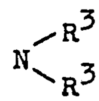

et 10 à 60 % d'une ou de plusieurs matières colorantes dans lesquelles

R = 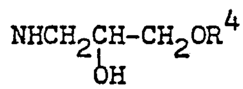

2. Utilisation des mélanges suivant la revendication 1 pour la teinture de polyesters synthétiques.